# EUROPÄISCHE PATENTSCHRIFT

(11) **EP 1 807 283 B1**
(45) Veröffentlichungstag und Bekanntmachung des Hinweises auf die Patenterteilung: **05.01.2011**
(21) Anmeldenummer: 05792035.7
(22) Anmeldetag: 07.10.2005
(51) Int. Cl.: B60N 2/225

(54) **VERSTELLVORRICHTUNG FÜR EINE FAHRZEUGKOMPONENTE, INSBESONDERE FÜR EINEN KRAFTFAHRZEUGSITZ UND VERFAHREN ZUR MONTAGE**
ADJUSTING DEVICE FOR A VEHICLE COMPONENT, IN PARTICULAR FOR A MOTOR VEHICLE SEAT AND METHOD FOR ASSEMBLING SAID DEVICE
DISPOSITIF DE REGLAGE POUR UN COMPOSANT DE VEHICULE, EN PARTICULIER POUR UN SIEGE DE VEHICULE ET PROCEDE DE MONTAGE ASSOCIE

(30) Priorität: 07.10.2004 DE 102004049114
(43) Veröffentlichungstag der Anmeldung: 18.07.2007
(73) Patentinhaber: Johnson Controls GmbH, 51399 Burscheid (DE)
(72) Erfinder: OTTO, Jürgen, 51399 Burscheid (DE); KIENKE, Ingo, 42929 Wermelskirchen (DE); ZYNDA, Martin, 51399 Burscheid (DE); BLENZ, Joachim, 55491 Büchenbeuren (DE); ALBERT, Kirubaharan, 51399 Burscheid (DE); BUDWEG, Mario, 42499 Hückeswagen (DE)
(74) Vertreter: Wolff, Felix
(86) Internationale Anmeldenummer: PCT/EP2005/055112
(87) Internationale Veröffentlichungsnummer: WO 2006/040303

(56) Entgegenhaltungen:
- DD-A1- 83 068
- DE-A1- 1 555 711
- DE-A1- 2 834 707
- DE-B- 1 291 570
- FR-A1- 2 743 764
- GB-A- 1 170 708
- GB-A- 1 237 796
- GB-A- 2 207 044

## Beschreibung

Die Erfindung betrifft eine Verstellvorrichtung für eine Fahrzeugkomponente, insbesondere für einen Kraftfahrzeugsitz. Weiterhin betrifft die vorliegende Erfindung ein Verfahren zur Herstellung der Verstellvorrichtung.

Verstellvorrichtungen für Kraftfahrzeugkomponenten sind allgemein bekannt, beispielsweise aus den Druckschriften GB 1 170 708 A1, DE 28 34 707 A1, DE 15 55 711 A1, FR 2 743 764 A1, GB 2 207 044 A1, GB 1 237 796 A1, DD 83 068 A1 und DE 1291 570 B. Dokument GB1170708A1 wird als nächstliegender Stand der Technik angesehen.

Zur kontinuierlichen Neigungsverstellung von Komponenten, insbesondere zur Verstellung der Rückenlehne eines Fahrzeugsitzes relativ zum Sitzteil, werden häufig Taumelversteller eingesetzt, da sie kontinuierlich in Eingriff sind, eine hohe Übersetzung gewährleisten, selbsthemmend sind und sich trotzdem relativ leicht drehen lassen. Die Bauteile der Neigungsversteller werden überwiegend durch Feinschneiden und ähnlichen in der Herstellung aufwendigen und teuren Prozessen hergestellt, da sie hohen Anforderungen bezüglich der Festigkeit genügen müssen, und damit das systembedingte Spiel der Neigungsversteller möglichst gering ist, insbesondere um Klappergeräusche zu vermeiden. Darüber hinaus werden zumeist Neigungsversteller verwendet, deren bereits enge Toleranzen durch geeignete Maßnahmen weiter reduziert und/oder kompensiert werden, um das Spiel zu reduzieren. Dies erfordert in aller Regel mehrere aufwendige zusätzliche Bauteile. Aufgrund der komplizierten Formen werden im Verarbeitungszustand zunächst häufig weichere Werkstoffe verwendet, die anschließend gehärtet werden müssen, so dass die Fertigung der Neigungsversteller teuer ist.

Aufgabe der vorliegenden Erfindung ist es, eine Verstellvorrichtung für eine Fahrzeugkomponente, insbesondere für einen Kraftfahrzeugsitz, zur Verfügung zu stellen, bei der das systembedingte Spiel mit weniger aufwendigen Mitteln reduziert und/oder kompensiert wird und/oder die weniger enge Fertigungstoleranzen erfordert und/oder die eine weniger hohe Festigkeit erfordert und/oder die schnell, einfach und kostengünstig herstellbar ist.

Die Aufgabe wird gelöst mit einer Verstellvorrichtung mit den Merkmalen nach Patentanspruch 1. Vorteilhafte Ausführungsformen und Weiterbildungen sind in den Unteransprüchen angegeben.

Eine Verstellvorrichtung für eine Fahrzeugkomponente, insbesondere für einen Kraftfahrzeugsitz, umfasst ein erstes Beschlagteil, ein zweites Beschlagteil, und einen Exzenter, die jeweils auf einer gemeinsamen Drehachse angeordnet sind, wobei sich in einem Betriebsmodus die Drehachse dreht, wobei der Exzenter um die Drehachse gedreht wird, und wobei die relative Lage der beiden Beschlagteile zueinander verstellt wird. Der Exzenter kann vorzugsweise ein erstes Exzenterelement und ein zweites Exzenterelement umfassen, wobei jedes Exzenterelement zumindest ein erstes Drehmittel umfasst, das konzentrisch um den Exzenter angeordnet ist, wobei das zweite Beschlagteil aus zwei zweiten Beschlagteilelementen und das erste Beschlagteil aus zwei ersten Beschlagteilelementen gebildet ist, und wobei im Betriebsmodus das erste Drehmittel an dem ersten Beschlagteil abrollt.

Die Verstellvorrichtung weist mehrere Teilkomponenten auf, die jeweils ein erstes Beschlagteilelement, ein zweites Beschlagteilelement sowie gegebenenfalls ein Exzenterelement umfassen, die jeweils auf einer gemeinsamen Drehachse angeordnet sind, wobei die Teilkomponenten im Wesentlichen spiegelsymmetrisch zu einer Symmetrieebene angeordnet, die sich im Wesentlichen rechtwinklig zur Drehachse in der Mitte der Verstellvorrichtung erstreckt. Durch die erfindungsgemäße Aufteilung des zweiten Beschlagteils in zwei zweite Beschlagteilelemente und des ersten Beschlagteils in zwei erste Beschlagteilelemente, und gegebenenfalls des Exzenters in ein erstes und ein zweites Exzenterelement weisen die Beschlagteilelemente und/oder die Exzenterelemente eine weniger aufwendige Kontur auf, im Vergleich zur Kontur der Beschlagteile und des Exzenters. Dadurch können weniger weiche Werkstoffe verarbeitet werden, so dass die Werkstoffe nach der Verarbeitung nicht mehr gehärtet werden müssen. Die Exzenterelemente sowie die Beschlagteilelemente können daher kostengünstiger und schneller gefertigt werden.

Aufgrund der im Wesentlichen spiegelsymmetrischen Anordnung ist die Form der zweiten Beschlagteilelemente, der ersten Beschlagteilelemente und der Drehmittel im Wesentlichen gleich. Die Aufteilung der Beschlagteile und die hohe Anzahl der Drehmittel führt daher nicht zu einer erhöhten Bauteilvielfalt, sondern lediglich zu hohen Stückzahlen, so dass die Mehrkosten aufgrund der hohen Bauteilezahl durch die kostengünstigere Fertigung und aufgrund der nicht erforderlichen Härtung des Materials kompensiert sind. Die spiegelsymmetrische Anordnung ist einfach, gegebenenfalls automatisch und daher kostengünstig montierbar.

Durch die im Wesentlichen symmetrische Anordnung der Verstellvorrichtung teilt sich der Kraftfluss im Wesentlichen symmetrisch bzgl. der Symmetrieebene, so dass die Einzelbelastung der Teilkomponenten kleiner ist. Daher können weniger harte Materialien bzw. weniger dicke Materialien verwendet werden, so dass die Verstellvorrichtung leichter ist, weniger Platz bedarf und kein Härten des Materials erfolgen muss. Außerdem kann gegebenenfalls kostengünstigeres Material verwendet werden. Die Teilkomponenten sind daher kostengünstiger herstellbar.

Der Fachmann versteht, dass die ersten Beschlagteilelemente auch einteilig ausgeführt sein können. Ebenso können die ersten Drehmittel bei einem einteiligen Exzenter einteilig ausgeführt sein. In einer besonders einfachen Ausführung der Erfindung können die ersten Drehmittel drehfest an den zweiten Beschlagteilen angeordnet sein und an den ersten Beschlagteilen abrollen. Bevorzugt rollen die ersten Drehmittel auch an den zweiten Beschlagteilen ab. Besonders bevorzugt weist jede Teilkomponente ein zweites Drehmittel auf, wobei an dem Exzenter bzw. gegebenenfalls an den Exzenterelementen je ein erstes Drehmittel pro Teilkomponente und in der besonders bevorzugten Ausführungsform zusätzlich je ein zweites Drehmittel pro Teilkomponente angeordnet ist, die rechtwinklig zur Drehachse und konzentrisch um den Exzenter, bzw. die Exzenterelemente angeordnet sind. In dem Betriebsmodus sind die ersten Beschlagteilelemente relativ zu den zweiten Beschlagteilelementen durch Drehen des Exzenters, bzw. der Exzenterelemente um die Drehachse verstellbar, wobei jeweils die ersten Drehmittel der Teilkomponenten am ersten Beschlagteilelement und bevorzugt die zweiten Drehmittel der Teilkomponenten am zweiten Beschlagteilelement derselben Teilkomponente abrollt.

Bevorzugt sind die Exzenterelemente um einen Winkel um die Drehachse zueinander versetzt angeordnet, wobei der Winkel im Wesentlichen ein Bruchteil von 360° ist und der Teiler der Anzahl der Teilkomponenten oder der zu verstellenden Beschlagteile entspricht.

Die erfindungsgemäße Aufteilung der Beschlagteile und vorzugsweise des Exzenters in Beschlagteilelemente und Exzenterelemente ermöglicht eine im Wesentlichen beliebige Anzahl auf der Drehachse angeordneter, und daher hintereinandergeschalteter, Teilkomponenten, wobei die relative Lage der Beschlagteilelemente der Teilkomponenten zumindest teilweise zueinander verstellbar ist. Da mit steigender Anzahl Teilkomponenten die Anzahl der Bauteile steigt, steigt auch der Fertigungsaufwand, so dass die Anzahl der Teilkomponenten bzw. die Anzahl der relativ zueinander verstellbaren Beschlagteile aufgrund des Aufwands begrenzt ist. Der Fachmann versteht, dass die Anordnung der Exzenterelemente in einem Winkel zueinander, der ein Bruchteil von 360° ist, eine besonders vorteilhafte Ausführungsform der Erfindung ist, bei der sich die in den Teilkomponenten auftretenden Kräfte vorteilhaft zumindest teilweise gegenseitig aufheben. Es sind auch Ausführungsformen möglich, in denen der Winkel kein Bruchteil von 360° ist und/oder in denen der Teiler nicht der Anzahl der zu verstellenden Beschlagteile entspricht.

Besonders bevorzugt weist die Verstellvorrichtung genau eine erste Teilkomponente und genau eine zweite Teilkomponente auf, deren erstes Beschlagteil oder deren erste Beschlagteilelemente relativ zu den zweiten Beschlagteilelementen verstellbar sind. In dieser Ausführungsform ist der Bruchteil die Zahl 2 und der Winkel, um den die Exzenterelemente vorteilhaft zueinander um die Drehachse versetzt angeordnet sein können, beträgt 180°. Die Exzenterelemente können auch nicht versetzt zueinander sein oder der Exzenter kann einteilig ausgeführt sein.

Es ist beispielsweise eine erfindungsgemäße Verstellvorrichtung pro Seite eines Fahrzeugsitzes angeordnet, wobei beispielsweise das erste Beschlagteil mit einer Sitzflächenstruktur fest verbunden ist und das zweite Beschlagteil mit einer Lehnenstruktur fest verbunden ist. Es ist denkbar, dass auf den zwei Seiten des Fahrzeugsitzes unterschiedliche Ausführungsformen der erfindungsgemäßen Verstellvorrichtung angeordnet sind. Durch eine Erhöhung der Anzahl der Teilkomponenten kann beispielsweise vorteilhaft die Kraft erhöht werden, die durch die erfindungsgemäße Verstellvorrichtung übertragen werden kann. Beispielsweise kann auf einer Seite eines Fahrzeugsitzes, an der ein Sicherheitsgurt befestigt ist, eine größere, beispielsweise doppelte Anzahl von Teilkomponenten vorgesehen sein. Der höheren Anforderung an die Verstellvorrichtung durch die zusätzliche Last, die beispielsweise in einer Unfallsituation über den Sicherheitsgurt übertragen wird, kann durch diese modulare Bauweise der erfindungsgemäßen Verstellvorrichtung in vorteilhafter Weise Rechnung getragen werden.

Vorzugsweise schneidet eine durch den ersten Mittelpunkt des ersten Exzenterelements und den zweiten Mittelpunkt des zweiten Exzenterelements verlaufende Mittenachse die Drehachse. Das erste und das zweite Exzenterelement sind daher im wesentlichen um 180° zueinander um die Drehachse verstellt, so dass sie im wesentlichen punktsymmetrisch zum Schnittpunkt der Mittenachse mit der Drehachse angeordnet sind. Der Fachmann versteht, dass in dieser Ausführungsform die Anzahl der zu verstellenden Beschlagteile geradzahlig ist und insbesondere auch das Verstellen von genau zwei Beschlagteilen relativ zueinander umfasst. Da die Exzenterelemente im wesentlichen symmetrisch zueinander angeordnet sind, ist die Form der Exzenterelemente im wesentlichen gleich, so dass die Anzahl der verschiedenen Bauteile durch die Aufteilung des Exzenters in Exzenterelemente nicht erhöht ist, und dagegen die Stückzahlen der Exzenterelemente hoch sind.

Vorzugsweise sind die Exzenterelemente durch ein Kraftmittel gegeneinander verspannt, besonders bevorzugt mittels einer Feder. Das Kraftmittel nimmt die zwischen den Teilkomponenten und/oder Exzenterelementen wirkenden Kräfte beim Drehen der Drehachse zumindest teilweise auf und/oder kompensiert sie, so dass im wesentlichen keine ungewollte Änderung des Winkels entsteht, um den die Exzenterelemente zueinander versetzt angeordnet sind. Da die Exzenterelemente unmittelbar nebeneinander auf der Drehachse angeordnet sind, lassen diese sich besonders einfach und effektiv gegeneinander verspannen. Die Verspannung ist bei mehreren Drehmitteln pro Teilkomponente besonders vorteilhaft, um alle Drehmittel mit den jeweiligen Beschlagteilen in Eingriff zu halten. Dadurch wird zum Beispiel sehr effektiv vermieden, dass die Verstellvorrichtung störende Klappergeräusche abgibt.

In einer bevorzugten Ausführungsform umfasst der Exzenter ein erstes Exzenterelement und ein zweites Exzenterelement, die nebeneinander auf der Drehachse angeordnet sind und vorzugsweise aneinander anliegen. Gemeinsam mit dem Kraftmittel bilden sie einen Drehkörper, wobei an jedem Exzenterelement ein erstes Drehmittel, das jeweils am ersten Beschlagteil abrollt, und vorzugsweise ein zweites Drehmittel, das jeweils am zweiten Beschlagteil abrollt, angeordnet ist, die rechtwinklig zur Drehachse und konzentrisch um die Exzenterelemente angeordnet sind, und wobei in einem Betriebsmodus durch Drehen des Drehkörpers um die Drehachse das erste Beschlagteil relativ zum zweiten Beschlagteil verstellbar ist, wobei der Drehkörper die Drehachse im wesentlichen konzentrisch umläuft. Der Fachmann versteht, dass bei einer Verstellvorrichtung mit mehr als zwei Teilkomponenten der Drehkörper durch die Gesamtzahl der Exzenterelemente gebildet ist.
Erfindungsgemäß umläuft der Drehkörper die Drehachse im Wesentlichen konzentrisch. Der Mittelpunkt des Drehkörpers befindet sich daher im Betriebsmodus im Wesentlichen auf der Drehachse. Da die Exzenterelemente mit der Drehachse verbunden sind und die Exzentrizität der Exzenterelemente bezüglich der Drehachse im wesentlichen immer gleich ist, ist ihre relative Lage zueinander und zur Drehachse im wesentlichen durch das Kraftmittel bestimmt, durch das die Exzenterelemente gegeneinander verspannt sind.

Vorzugsweise weist die Verstellvorrichtung eine Welle auf, die die Drehachse bildet. Das Spiel zwischen den Exzenterelementen und der Welle ermöglicht dem Kraftmittel, die Exzenterelemente gegeneinander zu drehen. Es werden keine weiteren aufwendigen Bauteile zur Reduzierung des Spiels benötigt.

Bei einer Verstellvorrichtung mit einer geradzahligen Anzahl zueinander zu verstellender Beschläge und insbesondere mit genau zwei Teilkomponenten weist der Drehkörper entlang seiner Mittenachse eine größte Abmessung auf, die im wesentlichen einem größten Innendurchmesser eines Beschlagteiles oder eines Beschlagteilelementes entspricht.

In einer bevorzugten Ausführungsform weisen die zweiten Beschlagteilelemente jeweils mehrere zweite Beschlagteilzwischenelemente auf, besonders bevorzugt zumindest zwei, die im wesentlichen zueinander parallel angeordnet sind. Dadurch ist auch die Kontur der zweiten Beschlagteilzwischenelemente im Vergleich zu den ersten Beschlagteilelementen weiter vereinfacht und die Herstellung der zweiten Beschlagteilzwischenelemente daher ebenfalls leichter und insbesondere ohne abschließenden Härteprozess durchführbar. Vorzugsweise liegt jeweils ein Beschlagteilzwischenelement der ersten Teilkomponente an einem der beiden ersten Beschlagteilelemente und jeweils ein Beschlagteilzwischenelement der zweiten Teilkomponente an dem anderen der beiden ersten Beschlagteilelemente an. Ebenfalls bevorzugt weist jede Teilkomponente jeweils ein äußeres Beschlagteilzwischenelement auf. Das äußere Beschlagteilzwischenelement ist das Beschlagteilzwischenelement einer Teilkomponente, dessen Abstand von der Symmetrieebene am größten ist.

Bevorzugt erstrecken sich das erste Beschlagteil und/oder die ersten Beschlagteilelemente und/oder die zweiten Beschlagteilelemente und/oder die zweiten Beschlagteilzwischenelemente und/oder die ersten und zweiten Drehmittel im wesentlichen flächig und/oder sind aus einem sich flächig erstreckenden Material herstellbar. Dadurch sind sie mit herkömmlichen Verfahren in kurzen Zykluszeiten und aus kostengünstigem Material herstellbar, beispielsweise aus dünnen Blechen. Aufgrund ihrer einfachen Konturen und der sich daraus ergebenden einfacheren Fertigung sind die Beschlagteile, Beschlagteilelemente, Beschlagteilzwischenelemente und/oder Drehmittel durch härtere Werkstoffe herstellbar, so dass sie insbesondere nicht nach der Verarbeitung gehärtet werden müssen. Die Bauteile sind daher einfach, schnell, kostengünstig und gegebenenfalls automatisiert herstellbar.

Bevorzugt liegt das erste Beschlagteil und/oder die ersten Beschlagteilelemente zumindest teilweise an den zweiten Beschlagteilelementen und/oder den zweiten Beschlagteilzwischenelementen an, wobei die zweiten Beschlagteilelemente und/oder die zweiten Beschlagteilzwischenelemente zumindest teilweise aneinander und wobei die ersten und zweiten Drehmittel jeweils zumindest teilweise aneinander anliegen.

Die aneinander anliegenden Beschlagteile, Beschlagteilelemente, Beschlagteilzwischenelemente und Drehmittel sind leicht montierbar und einfach miteinander verbindbar. Beispielsweise können sie miteinander verschweißt werden, bevorzugt mittels Laserverschweißen, so dass ihre Festigkeit und/oder die Festigkeit der Verstellvorrichtung verbessert ist, und sie sich nicht gegeneinander verstellen und/oder verkanten.

Durch die im wesentlichen flächige und parallele Anordnung der Beschlagteile, Beschlagteilelemente, Beschlagteilzwischenelemente und Drehmittel zueinander ist ihre Flächenbelastbarkeit sehr hoch, da Kräfte, die auf parallel und flächig aneinander liegende Bauteile wirken, im wesentlichen gleichmäßig auf die Bauteile verteilt werden.

Vorzugsweise weisen das erste Beschlagteil und/oder die ersten Beschlagteilelemente jeweils ein erstes Form- und/oder Kraftschlussmittel auf, das konzentrisch um die Drehachse angeordnet ist, wobei die zweiten Beschlagteilelemente und/oder zumindest ein jeweils zweites Beschlagteilzwischenelement ein zweites Form- und/oder Kraftschlussmittel aufweisen, das konzentrisch um die Drehachse angeordnet ist, wobei die ersten Drehmittel jeweils ein drittes Form- und/oder Kraftschlussmittel und die zweiten Drehmittel jeweils ein viertes Form- und/oder Kraftschlussmittel aufweisen, wobei jeweils die dritten Form- und/oder Kraftschlussmittel mit einem ersten Form- und/oder Kraftschlussmittel und jeweils die viertes Form- und/oder Kraftschlussmittel mit einem zweiten Form- und/oder Kraftschlussmittel zumindest teilweise in Eingriff sind. Dadurch werden beim Drehen der Drehachse die Drehmittel so gedreht, dass die dritten Form- und/oder Kraftschlussmittel an den ersten Form- und/oder Kraftschlussmitteln und die vierten Form- und/oder Kraftschlussmittel an den zweiten Form- und/oder Kraftschlussmitteln abrollen.

Bevorzugt umfasst der Drehkörper ein erstes und ein zweites Gleitmittel, wobei das erste Gleitmittel konzentrisch um den Exzenter bzw. das erste Exzenterelement und zwischen dem ersten Exzenterelement und dem ersten und/oder zweiten Drehmittel der ersten Teilkomponente angeordnet ist und wobei das zweite Gleitmittel konzentrisch um den Exzenter bzw. das zweite Exzenterelement und zwischen dem ersten und/oder zweiten Drehmittel der zweiten Teilkomponente angeordnet ist. Vorzugsweise reduziert das Gleitmittel die Reibung zwischen dem Exzenter bzw. den Exzenterelementen und den Drehmitteln und gewährleistet einen gleichmäßigen Rundlauf beim Drehen des Exzenters bzw. der Exzenterelemente. Der Fachmann versteht, dass die Gleitmittel sowohl als separates Bauteil als auch als Bestandteil der Drehmittel vorgesehen sein können. Besonders bevorzugt weist die mit dem Exzenterelementen zusammenwirkende Oberfläche der Drehmittel beim Drehen der Exzenterelemente eine ausreichend geringe Reibung auf, so dass kein Gleitmittel vorgesehen sein muss.

Vorzugsweise sind die Form- und/oder Kraftschlussmittel Zähne. Zähne haben den Vorteil, dass sie auch dann noch miteinander in Eingriff sind, wenn sie geringfügig zueinander verstellt sind, so dass sie auch dann noch aneinander abrollbar sind. Weiterhin weisen Zähne den Vorteil auf, dass sie gleichmäßig gegeneinander verstellbar sind. Außerdem sind Verzahnungen mit herkömmlichen Mitteln herstellbar.

Bevorzugt ist die Anzahl der Zähne der dritten Form- und/oder Kraftschlussmittel gegenüber der Anzahl der Zähne der vierten Form- und/oder Kraftschlussmittel verschieden. Der Fachmann versteht, dass die verschiedene Anzahl der Zähne im Betriebsmodus zu einem Verschieben der ersten Form- und/oder Kraftschlussmittel relativ zu den zweiten Form- und/oder Kraftschlussmitteln führt, so dass im Betriebsmodus das erste Beschlagteil relativ zum zweiten Beschlagteil verstellt wird. Die verschiedene Anzahl der Zähne bestimmt daher die Übersetzung, mit der die Beschlagteile zueinander verstellt werden. Bei genau zwei Teilkomponenten bestimmt die verschiedene Anzahl der Zähne die Übersetzung der Verstellvorrichtung.

In einer bevorzugten Ausführungsform weisen die ersten Drehmittel der ersten und zweiten Teilkomponenten einen ersten Außenradius auf, wobei die zweiten Drehmittel der ersten und zweiten Teilkomponenten einen zweiten Außenradius aufweisen, und wobei der erste Außenradius vom zweiten Außenradius bevorzugt verschieden ist. Dadurch gleiten die Drehmittel mit dem größeren Außenradius zumindest teilweise entlang einer im wesentlichen zur Symmetrieebene parallelen Fläche der Beschlagteilelemente, an denen die Drehmittel mit dem kleineren Außenradius abrollen. Die Drehmittel sind in Richtung der Drehachse geschachtelt angeordnet, so dass beispielsweise das Spiel entlang der Drehachse reduziert ist. Im Wesentlichen tritt kein Taumeln um die Drehachse auf.

Durch die Aufteilung der Verstellvorrichtung in symmetrisch aufgebaute Teilkomponenten verteilen sich die auf die Verstellvorrichtung wirkenden Kräfte im wesentlichen symmetrisch auf ihre Teilkomponenten, so dass die Einzelbelastung geringer ist. Da sie zumindest teilweise aneinander anliegen, ist ihre Flächenbelastbarkeit groß. Insgesamt können daher weniger feste Materialien verwendet werden. Bei Verwendung von sich im wesentlichen flächig erstreckenden Materialien, beispielsweise Blechen, die parallel zueinander angeordnet werden, weisen die Beschlagteile, Beschlagteilelemente, Beschlagteilzwischenelemente und/oder Drehmittel weniger aufwendigen Konturen auf, so dass sie aus härterem Material und einfacher herstellbar sind. Daher entfällt ein Härteprozess nach dem Herstellen dieser Bauteile. Aufgrund der geschachtelten Anordnung ist das Spiel zwischen ihnen gering, so dass keine zusätzlichen Bauteile zur Reduzierung des Spiels erforderlich sind und die Anforderungen an die Fertigungstoleranzen weniger hoch sind.

Vorzugsweise weist das erste Beschlagteil oder die ersten Beschlagteilelemente Haltemittel auf. Die Haltemittel stellen die relative Lage der zweiten Beschlagteilelemente oder der zweiten Beschlagteilzwischenelemente sicher, so dass zwischen dem ersten Beschlagteil oder den ersten Beschlagteilelementen und dem zweiten Beschlagteil oder den zweiten Beschlagteilelementen oder den zweiten Beschlagteilzwischenelementen im Wesentlichen kein ungewollter Versatz entstehen kann. Weiterhin erhöhen sie die Steifigkeit der Verstellvorrichtung.

Ein weiterer Gegenstand der vorliegenden Erfindung ist ein Verfahren zur Herstellung einer erfindungsgemäßen Verstellvorrichtung, wobei die Drehmittel und Beschlagteile aus einem flächigen Material ausgestanzt und anschließend teilweise miteinander verbunden werden, vorzugsweise durch Laserschweißen. Vorzugsweise werden jeweils die ersten und zweiten Drehmittel der Teilkomponenten drehfest miteinander verbunden, wobei die Beschlagteilzwischenelemente der Teilkomponenten drehfest miteinander verbunden werden, wobei gegebenenfalls zumindest teilweise die Beschlagteilelemente der Teilkomponenten miteinander verbunden werden oder einstückig sind, wobei die Bauteile der Verstellvorrichtung auf der Drehachse angeordnet werden, und wobei dann die Beschlagteilelemente und/oder zumindest ein Beschlagteilzwischenelement der beiden außen angeordneten Teilkomponenten zumindest teilweise miteinander verbunden werden.

Das Verfahren ist schnell, einfach und zumindest teilweise automatisiert durchführbar und daher kostengünstig.

Im folgenden wird die Erfindung anhand von **Figuren** beschrieben. Die **Figuren** sind lediglich beispielhaft und schränken den allgemeinen Erfindungsgedanken nicht ein.
- **Figur 1**: zeigt eine Explosionsdarstellung einer erfindungsgemäßen Verstellvorrichtung.
- **Figur 2**: zeigt in den Darstellungen **a** und **b** zwei Querschnitte quer zur Drehachse sowie in der Darstellung **c** einen Querschnitt entlang der Drehachse der Verstellvorrichtung der **Figur 1****.**
- **Figur 3**: zeigt schematisch die Anordnung der Form- und/oder Kraftschlussmittel in einem Querschnitt parallel zur Symmetrieebene der Verstellvorrichtung der **Figur 1****.**

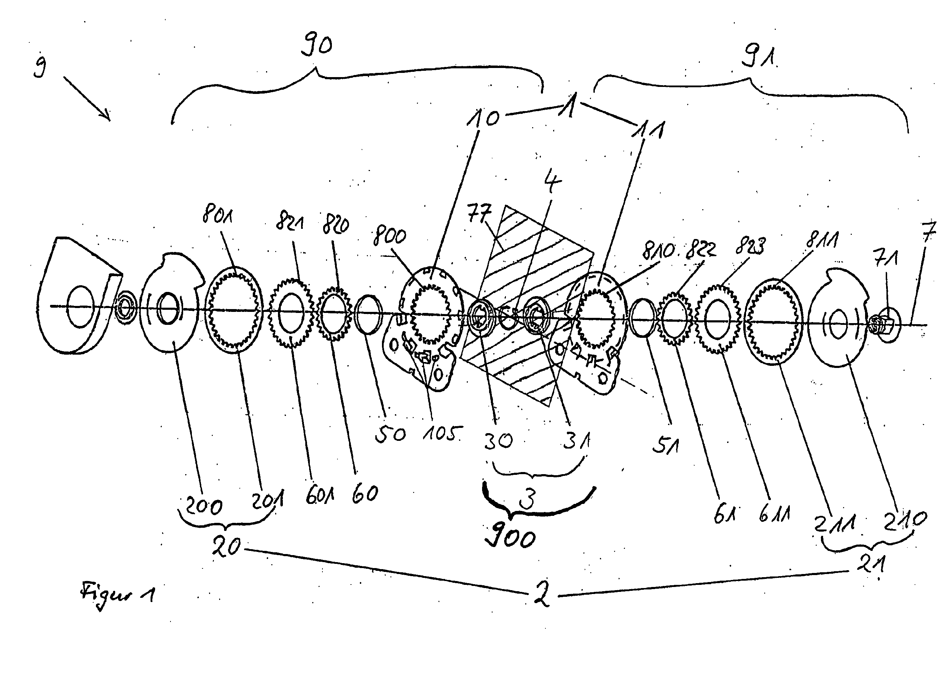

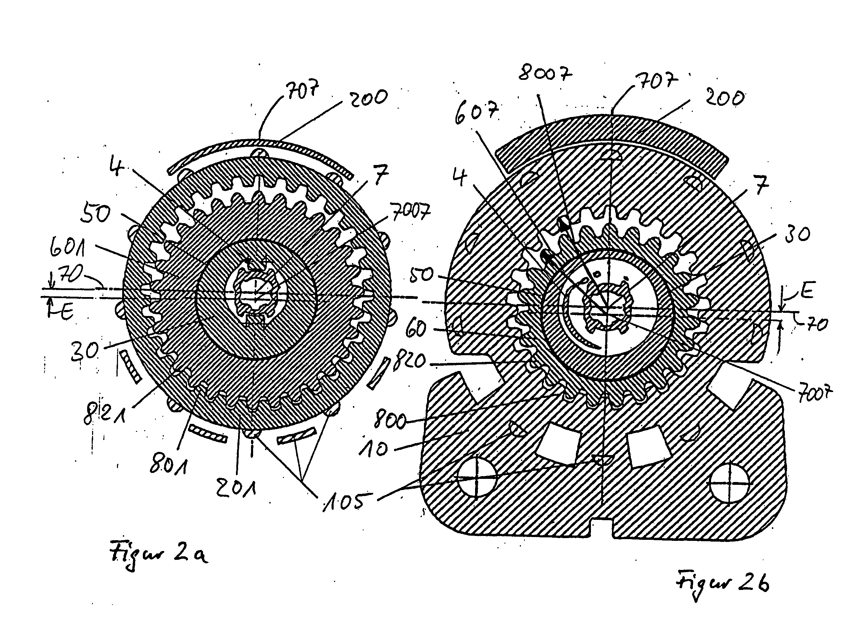

**Figur 1** zeigt eine Explosionsdarstellung einer erfindungsgemäßen Verstellvorrichtung 9. Die Verstellvorrichtung 9 weist eine erste Teilkomponente 90 und eine zweite Teilkomponente 91 auf, die jeweils ein erstes Beschlagteilelement 10, 11, ein zweites Beschlagteilelement 20, 21 sowie ein Exzenterelement 30, 31 umfassen, die im wesentlichen zueinander parallel und auf einer gemeinsamen Drehachse 7 angeordnet sind, wobei die erste Teilkomponente 90 und zweite Teilkomponente 91, die ersten Beschlagteilelemente 10, 11, die zweiten Beschlagteilelemente 20, 21 und die Exzenterelemente 30, 31 jeweils zueinander im wesentlichen spiegelsymmetrisch bezüglich einer rechtwinklig zur Drehachse 7 angeordneten Symmetrieebene 77 angeordnet sind. Die Verstellvorrichtung weist eine Welle 71 auf, die die Drehachse 7 bildet. Das Exzenterelement 30 der ersten Teilkomponente 90 ist das erste Exzenterelement 30 und das der zweiten Teilkomponente 91 ist das zweite Exzenterelement 31. Das erste Exzenterelement 30 ist im wesentlichen um einen Winkel 777 um die Drehachse 7 zum zweiten Exzenterelement 31 gedreht, wobei der Winkel 777 im wesentlichen ein Bruchteil von 360° ist und der Teiler der Anzahl der Teilkomponenten 90, 91- hier nämlich zweientspricht, so dass der Winkel 777 hier 180° beträgt. Die ersten Beschlagteilelemente 10, 11 bilden ein erstes Beschlagteil 1, die zweiten Beschlagteilelemente 20, 21 ein zweites Beschlagteil 2 und die Exzenterelemente 30, 31 einen Exzenter 3, wobei die Exzenterelemente 30, 31 durch ein Kraftmittel 4, beispielsweise einer Feder, gegeneinander verspannt sind. Die zweiten Beschlagteilelemente 20, 21 weisen jeweils zwei zweite Beschlagteilzwischenelemente 200, 210, 201, 211 auf, wobei zumindest jeweils eines der Beschlagteilzwischenelemente 201, 211 ein zweites Form- und/oder Kraftschlussmittel 801, 811 aufweist, hier eine Innenverzahnung. Die ersten Beschlagteilelemente 10, 11 weisen ein erstes Form- und/oder Kraftschlussmittel 800, 810 auf und zwar ebenfalls eine Innenverzahnung. Weiterhin zeigt die Darstellung jeweils ein erstes Drehmittel 60, 61 und ein zweites Drehmittel 601, 611 der ersten und zweiten Teilkomponenten 90, 91, wobei jeweils ein erstes und zweites Drehmittel 60, 601 im verbauten Zustand der Verstellvorrichtung 9 konzentrisch um das erste Exzenterelement 30 und jeweils ein erstes und zweites Drehmittel 61, 611 im verbauten Zustand der Verstellvorrichtung 9 konzentrisch um das zweite Exzenterelement 31 und rechtwinklig zur Drehachse 7 angeordnet sind. Die ersten Drehmittel 60, 61 weisen jeweils ein drittes Form- und/oder Kraftschlussmittel 820, 822, nämlich eine Außenverzahnung, und die zweiten Drehmittel 601, 611 weisen ein viertes Form- und/oder Kraftschlussmittel 821, 823, ebenfalls eine Außenverzahnung, auf, wobei die ersten Drehmittel 60, 61 einen kleineren ersten Außenradius 607, 617 im Vergleich zum zweiten Außenradius 6017, 6117 der zweiten Drehmittel 601, 611 aufweisen und wobei die dritten und vierten Form- und/oder Kraftschlussmittel 820, 822, 821, 823 sich in der Anzahl der Zähne unterscheiden. Der Außenradius 607, 617, 6017, 6117 eines Drehmittels 60, 61, 601, 611 mit einer Außenverzahnung ist der durch die Zähne bestimmte größtmögliche Außenradius und am Beispiel des ersten Außenradius 607 des ersten Drehmittels 60 in **Figur 2b** gezeigt. Der Außenradius 607, 617, 6017, 6117 eines Drehmittels 60, 61, 601, 611 ist auch der Außenradius 607, 617, 6017, 6117eines Form- und/oder Kraftschlussmittels 820, 821, 822, 823 des Drehmittels 60, 61, 601, 611.

Bei der Montage der Verstellvorrichtung werden zunächst die ersten Beschlagteilelemente 10, 11, die zweiten Beschlagteilzwischenelemente 20, 21, und jeweils das erste und zweite Drehmittel 60, 601 der ersten und zweiten Teilkomponenten 90, 91 miteinander verbunden, bevorzugt mittels Laserschweißen, und dann die Bauteile der Verstellvorrichtung 9 in der dargestellten Reihenfolge angeordnet. Die an den ersten Beschlagteilelementen 10, 11 zumindest teilweise anliegenden zweiten Beschlagteilzwischenelemente 201, 211 werden mittels Haltemitteln 105 an den ersten Beschlagteilelementen 10, 11 geführt und/oder fixiert. Nach dem Anordnen der Bauteile werden die äußeren zweiten Beschlagteilzwischenelemente 200, 210 miteinander verbunden, ebenfalls bevorzugt mittels Laserschweißen. Im verbauten Zustand bilden die Exzenterelemente 30, 31 einen Drehkörper 900, wobei zwischen dem ersten Exzenterelement 30 und dem ersten und/oder zweiten Drehmittel 60, 601 der ersten Teilkomponente 90 ein erstes Gleitmittel 50 und zwischen dem zweiten Exzenterelement 31 und dem ersten und/oder zweiten Drehmittel 61, 611 der zweiten Teilkomponente 91 ein zweites Gleitmittel 51 angeordnet ist.

Im Betriebszustand dreht sich die Drehachse 7, so dass der Drehkörper 900 konzentrisch um die Drehachse 7 gedreht wird, wobei das dritte Form- und/oder Kraftschlussmittel 820 des ersten Drehmittels 60 am ersten Form- und/oder Kraftschlussmittel 800 des ersten Beschlagteilelementes 10 der ersten Teilkomponente 90 sowie das dritte Form- und/oder Kraftschlussmittel des ersten Drehmittels 61 am ersten Form- und/oder Kraftschlussmittel 810 des ersten Beschlagteilelementes 11 der zweiten Teilkomponente 91 abrollen, und wobei das vierte Form- und/oder Kraftschlussmittel 821 des zweiten Drehmittels 601 am zweiten Form- und/oder Kraftschlussmittel 801 des zweiten Beschlagteilzwischenelementes 201 der ersten Teilkomponente 90 sowie das vierte Form- und/oder Kraftschlussmittel 823 des zweiten Drehmittels 611 am zweiten Form- und/oder Kraftschlussmitteln 811 des zweiten Beschlagteilzwischenelementes 211 der zweiten Teilkomponente 91 abrollen. Die zweiten Beschlagteilzwischenelemente 201, 211, an deren zweiten Form- und/oder Kraftschlussmitteln 801, 811 die vierten Form- und/oder Kraftschlussmittel 821, 823 der zweiten Drehmittel 601, 611 abrollen, liegen zumindest teilweise an den ersten Beschlagteilelementen 10, 11 an. Aufgrund der verschiedenen Anzahl der Zähne wird dabei das erste Beschlagteil 1 relativ zum zweiten Beschlagteil 2 gedreht.

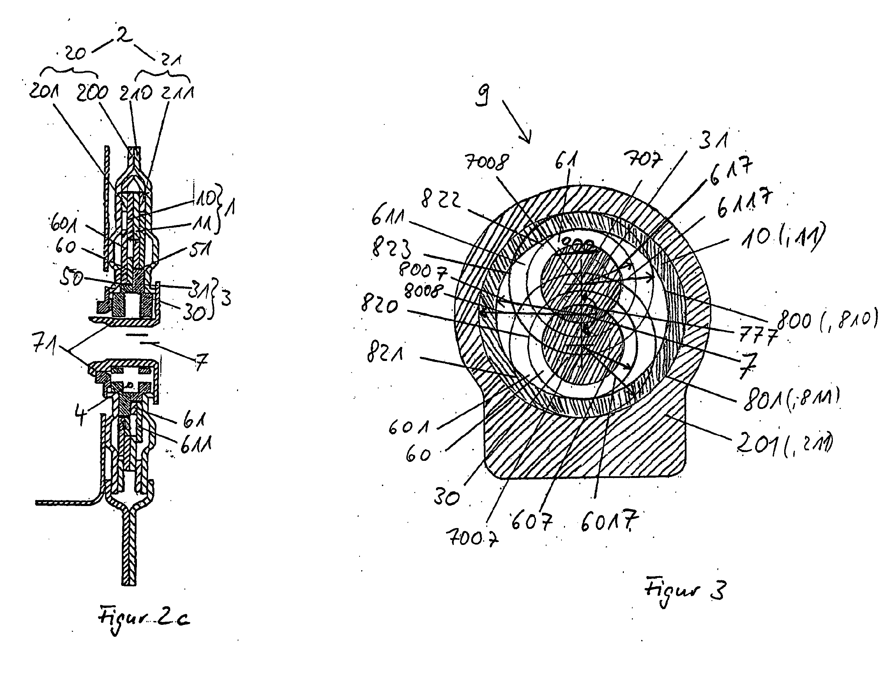

**Figur 2** zeigt in den Darstellungen **a** und **b** zwei Querschnitte quer zur Drehachse 7 sowie in der Darstellung **c** einen Querschnitt entlang der Drehachse 7 der Verstellvorrichtung 9 aus **Figur 1****.** Die Darstellungen **a** und **b** zeigen beide Querschnitte durch die erste Teilkomponente 90 der Verstellvorrichtung 9. Die folgenden Ausführungen gelten daher analog für die zweite Teilkomponente 91. In Darstellung **a** ist das erste Exzenterelement 30 sichtbar, um das konzentrisch das erste Gleitmittel 50 angeordnet ist, um das wiederum konzentrisch das zweite Drehmittel 601 angeordnet ist. Das zweite Drehmittel 601 weist das vierte Form- und/oder Kraftschlussmittel 821 auf, welches zumindest teilweise an dem zweiten Beschlagteilzwischenelement 201 anliegt, das im verbauten Zustand zumindest teilweise am ersten Beschlagteilelement 10 anliegt. Das zweite Beschlagteilzwischenelement 201 weist das zweite Form- und/oder Kraftschlussmittel 801 auf, welches mit dem vierten Form- und/oder Kraftschlussmittel 821 des zweiten Drehmittels 601 zumindest teilweise in Eingriff ist. Sichtbar sind weiterhin die Haltemittel 105 des ersten Beschlagteilelementes 10. Außerdem ist das äußere Beschlagteilzwischenelement 200 zumindest teilweise sichtbar, welches im verbauten Zustand mit dem am ersten Beschlagteilelement 10 anliegenden zweiten Beschlagteilzwischenelement 201 verschweißt ist. Weiterhin ist das Kraftmittel 4, welches das erste und das zweite Exzenterelement 30, 31 gegeneinander verspannt, zumindest teilweise sichtbar. Die Drehachse 7 ist durch ein Kreuz angedeutet. Das erste Exzenterelement 30, das erste Gleitmittel 50 sowie das zweite Drehmittel 601 sind konzentrisch um den ersten Mittelpunkt 7007 des ersten Exzenterelements 30 und exzentrisch um die Drehachse 7 angeordnet, wobei der Abstand des ersten Mittelpunktes 7007 des ersten Exzenterelements 30 von der Drehachse 7 die Exzentrizität E des ersten Exzenterelements 30 ist. Die Darstellung zeigt weiterhin eine Draufsicht auf die Mittenachse 707, die den ersten Mittelpunkt 7007 des ersten Exzenterelements 30 mit dem zweiten Mittelpunkt 7008 des zweiten Exzenterelements 31 verbindet. Im Gegensatz zur Darstellung **a** zeigt die Darstellung **b** das erste Beschlagteilelement 10 mit den ersten Form- und/oder Kraftschlussmitteln 800 sowie das erste Drehmittel 60 mit dem dritten Form- und/oder Kraftschlussmittel 820, das zumindest teilweise in Eingriff mit dem ersten Form- und/oder Kraftschlussmittel 800 ist. Das erste Drehmittel 60 ist konzentrisch um das erste Exzenterelement 30 angeordnet.

Darstellung **c** zeigt die Verstellvorrichtung der **Figur 1** im verbauten Zustand in einem Querschnitt entlang der Drehachse 7. Die Darstellung zeigt die zweiten Beschlagteilzwischenelemente 201, 200, 210, 211, wobei jeweils ein äußeres Beschlagteilzwischenelement 201, 211 und ein Beschlagteilzwischenelement 200, 210, welches zumindest teilweise an einem ersten Beschlagteilelement 10, 11 derselben Teilkomponente 90, 91 anliegt und welches hier außerdem mit dem äußeren Beschlagteilzwischenelement 201, 211 derselben Teilkomponente 90, 91 verschweißt ist, ein zweites Beschlagteilelement 20, 21 bilden. Die beiden zweiten Beschlagteilelemente 20, 21 bilden das zweite Beschlagteil 2. Die zweiten Beschlagteilelemente 20, 21 liegen zumindest teilweise aneinander an und sind miteinander verschweißt. Weiterhin zeigt die Darstellung **c** die beiden ersten Beschlagteilelemente 10, 11, die ein erstes Beschlagteil 1 bilden, zumindest teilweise aneinander anliegen und miteinander verschweißt sind. Um die Drehachse 7 sind das erste Exzenterelement 30 sowie das zweite Exzenterelement 31 angeordnet, die gemeinsam den Exzenter 3 bilden und durch das Kraftmittel 4, hier eine Feder, gegeneinander verspannt sind. Konzentrisch um das erste Exzenterelement 30 ist das erste und das zweite Drehmittel 60, 601 der ersten Teilkomponente 90 rechtwinklig zur Drehachse 7 angeordnet, wobei zwischen dem ersten Exzenterelement 30 und seinem ersten und/oder zweiten Drehmittel 60, 601 das erste Gleitmittel 50 angeordnet ist. Konzentrisch um das zweite Exzenterelement 31 ist das erste und das zweite Drehmittel 61, 611 der zweiten Teilkomponente 91 rechtwinklig zur Drehachse 7 angeordnet, wobei zwischen dem zweiten Exzenterelement 31 und seinem ersten und/oder zweiten Drehmittel 61, 611 das zweite Gleitmittel 51 angeordnet ist. Die ersten und zweiten Drehmittel 60, 601, 61, 611 einer der Teilkomponenten 90, 91 sind bevorzugt jeweils miteinander verschweißt. Der erste Außenradius 607, 617 der ersten Drehmittel 60, 61, sowie der zweite Außenradius 6017, 6117 der zweiten Drehmittel 601, 611 sind jeweils gleich, während der erste Außenradius 607, 617 und der zweite Außenradius 6017, 6117 verschieden sind. Da das erste und zweite Exzenterelement 30, 31 spiegelsymmetrisch zur Symmetrieebene 77, die in **Figur 1** gezeigt ist, und zueinander um 180° um die Drehachse 7 versetzt sind, gleiten die Drehmittel 601, 611 mit dem größeren Außenradius 6017, 6117 zumindest teilweise entlang einer im wesentlichen zur Symmetrieebene 77 parallelen Fläche der Beschlagteilelemente 10, 11, an denen die Drehmittel 60, 61 mit dem kleineren Außenradius 607, 617 abrollen. In der gezeigten Ausführungsform weisen die zweiten Drehmittel 601, 611 den größeren zweiten Außenradius 6017, 6117 auf. Dadurch und da die Exzenterelemente 30, 31 jeweils eine Exzentrizität E zur Drehachse 7 aufweisen und zueinander um 180°zur Drehachse 7 versetzt sind, entsteht eine geschachtelte Anordnung der Drehmittel 601, 60, 61, 611, bei der die ersten Drehmittel 60, 61 mit dem kleineren ersten Außenradius 607, 617 benachbart und um den Betrag der doppelten Exzentrizität E in Richtung der Mittenachse 707 zueinander verschoben sind. Die zweiten Drehmittel 601, 611 liegen jeweils an den ersten Drehmitteln 60, 61 derselben Teilkomponente 90, 91 an und das zweite Drehmittel 601 der ersten Teilkomponente 90 ist in Richtung der Mittenachse 707 um den Betrag der doppelten Exzentrizität E zum zweiten Drehmittel 611 der zweiten Teilkomponente 91 verschoben.

**Figur 3** zeigt schematisch die Anordnung der Form- und/oder Kraftschlussmittel 800, 810, 801, 811, 820, 822, 821, 823 in einem Querschnitt parallel der Symmetrieebene 77 der Verstellvorrichtung 9 der **Figur 1****.** Die **Figur** zeigt das am ersten Beschlagteilelement 10 zumindest teilweise anliegende zweite Beschlagteilzwischenelement 201 sowie zumindest teilweise das erste Beschlagteilelement 10 der ersten Teilkomponente 90 und den Drehkörper 900. Die Anordnung gilt jedoch analog für das zweite Beschlagteilzwischenelement 211 sowie das erste Beschlagteilelement 11 der zweiten Teilkomponente 91. Der Drehkörper 900 ist aus dem ersten Exzenterelement 30, dem zweiten Exzenterelement 31 gebildet, wobei jeweils ein erstes und zweites Drehmittel 60, 601, 61, 611 um das erste und zweite Exzenterelement 30, 31 konzentrisch angeordnet ist. Jeweils die ersten, zweiten, dritten und vierten Form- und/oder Kraftschlussmittel 800, 810, 801, 811, 820, 822, 821, 823 sind durch einen Kreis angedeutet. Das dritte Form- und/oder Kraftschlussmittel 820 des ersten Drehmittels 60 der ersten Teilkomponente 90 rollt im Betriebsmodus am ersten Form- und/oder Kraftschlussmittel 800 des ersten Beschlagteilelementes 10 der ersten Teilkomponente 90 ab. Das vierte Form- und/oder Kraftschlussmittel 821 des zweiten Drehmittels 601 der zweiten Teilkomponente 90 rollt im Betriebsmodus am zweiten Form- und/oder Kraftschlussmittel 801 des zumindest einen zweiten Beschlagteilzwischenelementes 201 der ersten Teilkomponente 91 ab. Das dritte Form- und/oder Kraftschlussmittel 822 des ersten Drehmittels 61 der zweiten Teilkomponente 91 rollt im Betriebsmodus am ersten Form- und/oder Kraftschlussmittel 810 des ersten Beschlagteilelementes 11- deren Lage zur Verdeutlichung hier in Klammern gezeigt ist- der zweiten Teilkomponente 91 ab. Das vierte Form- und/oder Kraftschlussmittel 823 des zweiten Drehmittels 611 der zweiten Teilkomponente 91 rollt im Betriebsmodus am zweiten Form- und/oder Kraftschlussmittel 811 des zumindest einen zweiten Beschlagteilzwischenelementes 211- deren Lage zur Verdeutlichung hier in Klammern gezeigt ist- der zweiten Teilkomponente 91 ab.

Der erste Außenradius 607, 617 der ersten Drehmittel 60, 61 ist kleiner, als der zweite Außenradius 6017, 6117 der zweiten Drehmittel 601, 611. Dementsprechend weisen die ersten Beschlagteilelemente 10, 11 ein erstes Form- und/oder Kraftschlussmittel 800, 810 auf, dessen erster Innenradius 8007 von dem zweiten Innenradius 8008 der zweiten Form- und/oder Kraftschlussmittel 801, 811 der zweiten Beschlagteilelemente 20, 21 verschieden ist. Der Innenradius 8007, 8008 eines innenverzahnten Form und/oder Kraftschlussmittels 800, 810, 801, 811 ist der durch die Zähne bestimmte größtmögliche Innenradius und am Beispiel des ersten Innenradius 8007 des ersten Form- und/oder Kraftschlussmittels 800 des ersten Beschlagteilelementes 10 der ersten Teilkomponente 90 auch in **Figur 2b** verdeutlicht. Der Innenradius 8007, 8008 eines Form- und/oder Kraftschlussmittels 800, 810, 801, 811 eines Beschlagteilelementes 10, 11, 20, 21 ist auch der Innenradius 8007, 8008 des Beschlagteilelementes 10, 11, 20, 21. Jeweils der Innenradius 8007 der Form- und/oder Kraftschlussmittel 800, 810, welche mit den Form- und/oder Kraftschlussmitteln 820, 822 der ersten Drehmittel 60, 61 mit dem kleineren, ersten Außenradius 607, 617 zumindest teilweise in Eingriff sind, ist bevorzugt kleiner als der Innenradius 8008 der Form und/oder Kraftschlussmittel 801, 811, welche mit den Form- und/oder Kraftschlussmitteln 821, 823 der zweiten Drehmittel 601, 611 mit dem größeren, zweiten Außenradius 6017, 6117 in Eingriff sind.

Die Darstellung zeigt eine Draufsicht auf die Mittenachse 707, die den ersten Mittelpunkt 7007 des ersten Exzenterelements 30 mit dem zweiten Mittelpunkt 7008 des zweiten Exzenterelements 31 verbindet und im wesentlichen die Drehachse 7 schneidet und verdeutlicht den Winkel 777 von 180°, um den die Exzenterelemente 30, 31 zueinander versetzt um die Drehachse 7 angeordnet sind.

### Bezugszeichenliste:

- 1: Erstes Beschlagteil
- 10, 11: Erstes Beschlagteilelement
- 105: Haltemittel
- 2: Zweites Beschlagteil
- 20, 21: Zweites Beschlagteilelement
- 200, 201, 210, 211: Zweites Beschlagteilzwischenelement
- 3: Exzenter
- 30: Erstes Exzenterelement
- 31: Zweites Exzenterelement
- 4: Kraftmittel
- 50: Erstes Gleitmittel
- 51: Zweites Gleitmittel
- 60: Erstes Drehmittel der ersten Teilkomponente
- 601: Zweites Drehmittel der ersten Teilkomponente
- 607,617: Erster Außenradius
- 61: Erstes Drehmittel der zweiten Teilkomponente
- 611: Zweites Drehmittel der zweiten Teilkomponente
- 6017, 6117: Zweiter Außenradius
- 7: Drehachse
- 71: Welle
- 77: Symmetrieebene
- 707: Mittenachse
- 777: Winkel
- 7007: Erster Mittelpunkt des ersten Exzenterelements
- 7008: Zweiter Mittelpunkt des zweiten Exzenterelements
- 800, 810: Erste Form- und/oder Kraftschlussmittel
- 801, 811: Zweite Form- und/oder Kraftschlussmittel
- 820, 822: Dritte Form- und/oder Kraftschlussmittel
- 821, 823: Viertes Form- und/oder Kraftschlussmittel
- 8007: Erster Innenradius der ersten Form- u./o. Kraftschlussmittel
- 8008: Zweiter Innenradius der zweiten Form- u./o. Kraftschlussmittel
- 9: Verstellvorrichtung
- 90: Erste Teilkomponente
- 91: Zweite Teilkomponente
- 900: Drehkörper
- E: Exzentrizität der Exzenterelemente

## Patentansprüche

1. Verstellvorrichtung (9) für eine Fahrzeugkomponente, insbesondere für einen Kraftfahrzeugsitz, die ein erstes Beschlagteil (1), ein zweites Beschlagteil (2), einen Exzenter (3) und eine Drehachse (7) aufweist, wobei sich in einem Betriebsmodus die Drehachse (7) dreht und der Exzenter (3) um die Drehachse (7) drehbar ist, wobei mindestens ein erstes Drehmittel (60, 61) konzentrisch um den Exzenter (3) angeordnet ist, wobei das erste Drehmittel (60, 61) an dem ersten Beschlagteil (1) abrollbar ist, und wobei die relative Lage der beiden Beschlagteile (1, 2) zueinander verstellbar ist, **dadurch gekennzeichnet, dass** die Verstellvorrichtung (9) mehrere Teilkomponenten (90, 91) aufweist, die jeweils ein erstes Beschlagteilelement (10, 11) des ersten Beschlagteils (1) und ein zweites Beschlagteilelement (20, 21) des zweiten Beschlagteils (2) umfassen, wobei die Teilkomponenten (90, 91) im wesentlichen spiegelsymmetrisch zu einer Symmetrieebene (77) angeordnet sind, die sich rechtwinklig zur Drehachse (7) in der Mitte der Verstellvorrichtung (9) erstreckt, wobei die zweiten Beschlagteilelemente (20, 21) jeweils mehrere zweite Beschlagteilzwischenelemente (200, 201, 210, 211) aufweisen, die im wesentlichen zueinander parallel angeordnet sind, wobei die zweiten Beschlagteilzwischenelemente (200, 201, 210, 211) sich im wesentlichen flächig erstrecken und/oder aus einem sich flächig erstreckenden Material herstellbar sind.

2. Verstellvorrichtung (9) nach Patentanspruch 1, **dadurch gekennzeichnet, dass** die ersten Beschlagteilelemente (10, 11) einteilig ausgeführt sind und/oder dass das erste Drehmittel (60, 61) einteilig ausgeführt ist.

3. Verstellvorrichtung (9) nach Patentanspruch 1 oder 2, **dadurch gekennzeichnet, dass** das erste Drehmittel (60, 61) an dem zweiten Beschlagteil (2) abrollbar ist.

4. Verstellvorrichtung (9) nach einem der vorhergehenden Ansprüche, **dadurch gekennzeichnet, dass** der Exzenter (3) ein erstes Exzenterelement (30) und zumindest ein zweites Exzenterelement (31) umfasst, wobei vorzugsweise jedes Exzenterelement (30, 31) jeweils einer Teilkomponente (90, 91) zugeordnet ist.

5. Verstellvorrichtung (9) nach Anspruch 4, **dadurch gekennzeichnet, dass** die Exzenterelemente (30, 31) aneinander anliegend auf der Drehachse (7) angeordnet sind.

6. Verstellvorrichtung (9) nach Anspruch 4 oder 5, **dadurch gekennzeichnet, dass** die Exzenterelemente (30, 31) um einen Winkel (777) um die Drehachse (7) zueinander versetzt angeordnet sind, wobei der Winkel (777) ein Bruchteil von 360° ist, und wobei der Teiler der Anzahl der Teilkomponenten (90, 91) entspricht.

7. Verstellvorrichtung (9) nach einem der Ansprüche 4 bis 6, **dadurch gekennzeichnet, dass** die Exzenterelemente (30, 31) durch ein Kraftmittel (4) gegeneinander verspannt sind.

8. Verstellvorrichtung (9) nach einem der Ansprüche 4 bis 7, **dadurch gekennzeichnet, dass** eine durch einen ersten Mittelpunkt (7007) des ersten Exzenterelements (30) und einen zweiten Mittelpunkt (7008) des zweiten Exzenterelements (31) verlaufende Mittenachse (707) die Drehachse (7) schneidet.

9. Verstellvorrichtung (9) nach einem der Ansprüche 4 bis 8, **dadurch gekennzeichnet, dass** das erste Exzenterelement (30) und das zweite Exzenterelement (31) gemeinsam mit dem Kraftmittel (4) einen Drehkörper (900) bilden, und dass in dem Betriebsmodus durch Drehen des Drehkörpers (900) um die Drehachse (7) das erste Beschlagteil (1) relativ zum zweiten Beschlagteil (2) verstellbar ist, wobei der Drehkörper (900) die Drehachse (7) im wesentlichen konzentrisch umläuft.

10. Verstellvorrichtung (9) nach einem der vorhergehenden Ansprüche , **dadurch gekennzeichnet, dass** jede Teilkomponente ein zweites Drehmittel (601, 611) aufweist, das konzentrisch um den Exzenter (3) angeordnet ist, wobei das zweite Drehmittel (601, 611) jeweils an dem zweiten Beschlagteilelement (20, 21) derselben Teilkomponente (90, 91) abrollbar ist.

11. Verstellvorrichtung (9) nach einem der vorhergehenden Ansprüche, **dadurch gekennzeichnet, dass** die ersten Drehmittel (60, 61) und die zweiten Drehmittel (601, 611) rechtwinklig zur Drehachse (7) angeordnet sind, wobei jeweils das erste Drehmittel (60, 61) am jeweils ersten Beschlagteilelement (10, 11) und das zweite Drehmittel (601, 611) am jeweils zweiten Beschlagteilelement (20, 21) derselben Teilkomponente (90, 91) abrollbar ist.

12. Verstellvorrichtung (9) nach einem der vorherigen Ansprüche, **dadurch gekennzeichnet, dass** sie eine Welle (71) aufweist, die die Drehachse (7) bildet.

13. Verstellvorrichtung (9) nach einem der vorherigen Ansprüche, **dadurch gekennzeichnet, dass** die ersten Beschlagteilelemente (10, 11) und/oder die zweiten Beschlagteilelemente (20, 21) und/oder die ersten Drehmittel (60, 61) sich im wesentlichen flächig erstrecken und/oder aus einem sich flächig erstreckenden Material herstellbar sind.

14. Verstellvorrichtung (9) nach einem der Ansprüche 10 bis 13, **dadurch gekennzeichnet, dass** die zweiten Drehmittel (601, 611) sich im wesentlichen flächig erstrecken und/oder aus einem sich flächig erstreckenden Material herstellbar sind.

15. Verstellvorrichtung (9) nach einem der vorherigen Ansprüche, **dadurch gekennzeichnet, dass** die ersten Beschlagteilelemente (10, 11) jeweils ein erstes Form- und/oder Kraftschlussmittel (800, 810) aufweisen, das konzentrisch um die Drehachse (7) angeordnet ist, dass die zweiten Beschlagteilelemente (20, 21) ein zweites Form- und/oder Kraftschlussmittel (801, 811) aufweisen, das konzentrisch um die Drehachse (7) angeordnet ist, dass die ersten Drehmittel (60, 601) jeweils ein drittes Form- und/oder Kraftschlussmittel (820, 822) aufweisen, und dass jeweils die dritten Form- und/oder Kraftschlussmittel (820, 822) mit dem jeweiligen ersten Form- und/oder Kraftschlussmittel (800, 810) und/oder mit dem jeweiligen zweiten Form- und/oder Kraftschlussmittel (801 , 811) zumindest teilweise in Eingriff sind.

16. Verstellvorrichtung (9) nach einem der Ansprüche 10 bis 15, **dadurch gekennzeichnet, dass** die zweiten Drehmittel (61, 611) jeweils ein viertes Form- und/oder Kraftschlussmittel (821, 823) aufweisen, wobei jeweils die vierten Form- und/oder Kraftschlussmittel (821, 823) mit dem jeweiligen zweiten Form- und/oder Kraftschlussmittel (801 , 811) zumindest teilweise in Eingriff sind.

17. Verstellvorrichtung (9) nach einem der Ansprüche 10 bis 16, **dadurch gekennzeichnet, dass** jeweils zumindest das zweite Beschlagteilzwischenelement (201, 211) das zweites Form- und/oder Kraftschlussmittel (801, 811) aufweist.

18. Verstellvorrichtung (9) nach einem der Ansprüche 15 bis 17, **dadurch gekennzeichnet, dass** die Form- und/oder Kraftschlussmittel (800, 810, 801, 811, 820, 822, 821, 823) Zähne sind.

19. Verstellvorrichtung (9) nach Anspruch 18, **dadurch gekennzeichnet, dass** die Anzahl der Zähne der dritten Form- und/oder Kraftschlussmittel (820, 822) gegenüber der Anzahl der Zähne der vierten Form- und/oder Kraftschlussmittel (821, 823) verschieden ist.

20. Verstellvorrichtung (9) nach einem der Ansprüche 10 bis 19, **dadurch gekennzeichnet, dass** die ersten Drehmittel (60, 61) einen ersten Außenradius (607, 617) aufweisen, dass die zweiten Drehmittel (601, 611) einen zweiten Außenradius (6017, 6117) aufweisen, und dass der erste Außenradius (607, 617) vom zweiten Außenradius (6017, 6117) verschieden ist.

21. Verstellvorrichtung (9) nach einem der vorherigen Ansprüche, **dadurch gekennzeichnet, dass** das erste Beschlagteil (1) oder die ersten Beschlagteilelemente (10, 11) Haltemittel (105) aufweist.

22. Verfahren zur Herstellung einer Verstellvorrichtung (9) nach einem der vorhergehenden Patentansprüche, **dadurch gekennzeichnet, dass** zumindest die ersten Drehmittel (60, 61), die ersten Beschlagteilelemente (10, 11) und die zweiten Beschlagteilelemente (20, 21) aus einem im Wesentlichen flächigen Material ausgestanzt und anschließend teilweise miteinander verbunden werden, vorzugsweise durch Laserschweißen.

23. Verfahren zur Herstellung einer Verstellvorrichtung (9) nach einem der Patentansprüche 10 bis 22, **dadurch gekennzeichnet, dass** die ersten Drehmittel (60, 61), die ersten Beschlagteilelemente (10, 11), die zweiten Beschlagteilelemente (20, 21), die Beschlagteilzwischenelemente (200, 201, 210, 211) und die zweiten Drehmittel (601, 611) aus einem im Wesentlichen flächigen Material ausgestanzt und anschließend teilweise miteinander verbunden werden, vorzugsweise durch Laserschweißen.

24. Verfahren nach Anspruch 23, **dadurch gekennzeichnet, dass** jeweils die ersten und zweiten Drehmittel (60, 601, 61, 611) der Teilkomponenten (90, 91) drehfest miteinander verbunden werden, dass die Beschlagteilzwischenelemente (200, 201, 210, 211) der Teilkomponenten (90, 91) drehfest miteinander verbunden werden, dass die ersten Beschlagteilelemente (10, 11) der Teilkomponenten (90, 91) miteinander verbunden werden oder einstückig sind, dass die Bauteile der Verstellvorrichtung (9) auf der Drehachse (7) angeordnet werden, und dass dann die zweiten Beschlagteilelemente (20, 21) und/oder zumindest ein Beschlagteilzwischenelement (200, 210) der beiden außen angeordneten Teilkomponenten (90, 91) zumindest teilweise miteinander verbunden werden.

## Claims

1. Adjusting device (9) for a vehicle component, in particular for a motor vehicle seat, which adjusting device comprises a first fitting part (1), a second fitting part (2), an eccentric (3) and an axis of rotation (7), wherein, in an operating mode, the axis of rotation (7) rotates and the eccentric (3) can be rotated about the axis of rotation (7), wherein at least one first rotating means (60, 61) is arranged concentrically about the eccentric (3), wherein the first rotating means (60, 61) can roll along the first fitting part (1), and wherein the relative position of the two fitting parts (1, 2) with respect to each other can be adjusted, **characterized in that** the adjusting device (9) has a plurality of subcomponents (90, 91) which each comprise a first fitting-part element (10, 11) of the first fitting part (1) and a second fitting-part element (20, 21) of the second fitting part (2), with the subcomponents (90, 91) being arranged essentially mirror-symmetrically with respect to a plane of symmetry (77) which extends at right angles to the axis of rotation (7) in the center of the adjusting device (9), with the second fitting-part elements (20, 21) each having a plurality of second fitting-part intermediate elements (200, 201, 210, 211) which are arranged essentially parallel to one another, and with the second fitting-part intermediate elements (200, 201, 210, 211) extending in an essentially planar manner and/or being producible from a material extending in a planar manner.

2. Adjusting device (9) according to Patent Claim 1, **characterized in that** the first fitting-part elements (10, 11) are designed as a single part and/or **in that** the first rotating means (60, 61) is designed as a single part.

3. Adjusting device (9) according to Patent Claim 1 or 2, **characterized in that** the first rotating means (60, 61) can roll along the second fitting part (2).

4. Adjusting device (9) according to one of the preceding claims, **characterized in that** the eccentric (3) comprises a first eccentric element (30) and at least one second eccentric element (31), each eccentric element (30, 31) preferably being respectively assigned to a subcomponent (90, 91).

5. Adjusting device (9) according to Claim 4, **characterized in that** the eccentric elements (30, 31) are arranged bearing against each other on the axis of rotation (7).

6. Adjusting device (9) according to Claim 4 or 5, **characterized in that** the eccentric elements (30, 31) are offset with respect to each other by an angle (777) about the axis of rotation (7), the angle (777) being a fraction of 360°, and the divisor corresponding to the number of subcomponents (90, 91).

7. Adjusting device (9) according to one of Claims 4 to 6, **characterized in that** the eccentric elements (30, 31) are clamped in relation to each other by a dynamic means (4).

8. Adjusting device (9) according to one of Claims 4 to 7, **characterized in that** a center axis (707) running through a first center point (7007) of the first eccentric element (30) and a second center point (7008) of the second eccentric element (31) intersects the axis of rotation (7).

9. Adjusting device (9) according to one of Claims 4 to 8, **characterized in that** the first eccentric element (30) and the second eccentric element (31) together with the dynamic means (4) form a rotating body (900), and **in that**, in the operating mode, by rotation of the rotating body (900) about the axis of rotation (7), the first fitting part (1) can be adjusted relative to the second fitting part (2), the rotating body (900) revolving the axis of rotation (7) essentially concentrically.

10. Adjusting device (9) according to one of the preceding claims, **characterized in that** each subcomponent has a second rotating means (601, 611) which is arranged concentrically about the eccentric (3), with the second rotating means (601, 611) being rollable in each case along the second fitting-part element (20, 21) of the same subcomponent (90, 91).

11. Adjusting device (9) according to one of the preceding claims, **characterized in that** the first rotating means (60, 61) and the second rotating means (601, 611) are arranged at right angles to the axis of rotation (7), with the first rotating means (60, 61) each being rollable along each first fitting-part element (10, 11) and the second rotating means (601, 611) each being rollable along each second fitting-part element (20, 21) of the same subcomponent (90, 91).

12. Adjusting device (9) according to one of the preceding claims, **characterized in that** it has a shaft (71) which forms the axis of rotation (7).

13. Adjusting device (9) according to one of the preceding claims, **characterized in that** the first fitting-part elements (10, 11) and/or the second fitting-part elements (20, 21) and/or the first rotating means (60, 61) extend in an essentially planar manner and/or can be produced from a material extending in a planar manner.

14. Adjusting device (9) according to one of Claims 10 to 13, **characterized in that** the second rotating means (601, 611) extend in an essentially planar manner and/or can be produced from a material extending in a planar manner.

15. Adjusting device (9) according to one of the preceding claims, **characterized in that** the first-fitting part elements (10, 11) each have a first interlocking and/or frictional means (800, 810) which is arranged concentrically about the axis of rotation (7), **in that** the second fitting-part elements (20, 21) have a second interlocking and/or frictional means (801, 811) which is arranged concentrically about the axis of rotation (7), **in that** the first rotating means (60, 601) each have a third interlocking and/or frictional means (820, 822), and **in that** the third interlocking and/or frictional means (820, 822) are each at least partially in engagement with the respective first interlocking and/or frictional means (800, 810) and/or with the respective second interlocking and/or frictional means (801, 811).

16. Adjusting device (9) according to one of Claims 10 to 15, **characterized in that** the second rotating means (61, 611) each have a fourth interlocking and/or frictional means (821, 823), with the fourth interlocking and/or frictional means (821, 823) each being at least partially in engagement with the respective second interlocking and/or frictional means (801, 811).

17. Adjusting device (9) according to one of Claims 10 to 16, **characterized in that** at least the second fitting-part intermediate element (201, 211) in each case has the second interlocking and/or frictional means (801, 811).

18. Adjusting device (9) according to one of Claims 15 to 17, **characterized in that** the interlocking and/or frictional means (800, 810, 801, 811, 820, 822, 821, 823) are teeth.

19. Adjusting device (9) according to Claim 18, **characterized in that** the number of teeth of the third interlocking and/or frictional means (820, 822) differs from the number of teeth of the fourth interlocking and/or frictional means (821, 823).

20. Adjusting device (9) according to one of Claims 10 to 19, **characterized in that** the first rotating means (60, 61) have a first external radius (607, 617), **in that** the second rotating means (601, 611) have a second external radius (6017, 6117), and **in that** the first external radius (607, 617) differs from the second external radius (6017, 6117).

21. Adjusting device (9) according to one of the preceding claims, **characterized in that** the first fitting part (1) or the first fitting-part elements (10, 11) has retaining means (105).

22. Method for producing an adjusting device (9) according to one of the preceding claims, **characterized in that** at least the first rotating means (60, 61), the first fitting-part elements (10, 11) and the second fitting-part elements (20, 21) are punched out of an essentially planar material and are subsequently partially connected to one another, preferably by laser welding.

23. Method for producing an adjusting device (9) according to one of Patent Claims 10 to 22, **characterized in that** the first rotating means (60, 61), the first fitting-part elements (10, 11), the second fitting-part elements (20, 21), the fitting-part intermediate elements (200, 201, 210, 211) and the second rotating means (601, 611) are punched out of an essentially planar material and are subsequently partially connected to one another, preferably by laser welding.

24. Method according to Claim 23, **characterized in that** the first and second rotating means (60, 601, 61, 611) of the subcomponents (90, 91) are each connected to one another in a rotationally fixed manner, **in that** the fitting-part intermediate elements (200, 201, 210, 211) of the subcomponents (90, 91) are connected to one another in a rotationally fixed manner, **in that** the first fitting-part elements (10, 11) of the subcomponents (90, 91) are connected to each other or are integral, **in that** the components of the adjusting device (9) are arranged on the axis of rotation (7), and **in that** the second fitting-part elements (20, 21) and/or at least one fitting-part intermediate element (200, 210) of the two subcomponents (90, 91) arranged on the outside are then at least partially connected to one another.

## Revendications

1. Dispositif de réglage (9) pour un composant de véhicule, en particulier pour un siège de véhicule automobile, qui présente une première partie de ferrure (1), une deuxième partie de ferrure (2), un excentrique (3) et un axe de rotation (7), l'axe de rotation (7) tournant dans un mode de fonctionnement et l'excentrique (3) pouvant tourner autour de l'axe de rotation (7), au moins un premier moyen de rotation (60, 61) étant disposé concentriquement autour de l'excentrique (3), le premier moyen de rotation (60, 61) pouvant rouler sur la première partie de ferrure (1), et la position relative des deux parties de ferrure (1, 2) l'une par rapport à l'autre pouvant être réglée, **caractérisé en ce que** le dispositif de réglage (9) présente plusieurs composants partiels (90, 91) qui comprennent à chaque fois un premier élément partiel de ferrure (10, 11) de la première partie de ferrure (1) et un deuxième élément partiel de ferrure (20, 21) de la deuxième partie de ferrure (2), les composants partiels (90, 91) étant disposés essentiellement suivant une symétrie spéculaire par rapport à un plan de symétrie (77), qui s'étend perpendiculairement à l'axe de rotation (7) au milieu du dispositif de réglage (9), les deuxièmes éléments partiels de ferrure (20, 21) présentant à chaque fois plusieurs deuxièmes éléments intermédiaires partiels de ferrure (200, 201, 210, 211) qui sont disposés essentiellement parallèlement l'un à l'autre, les deuxièmes éléments intermédiaires partiels de ferrure (200, 201, 210, 211) s'étendant essentiellement à plat et/ou pouvant être fabriqués à partir d'un matériau s'étendant à plat.

2. Dispositif de réglage (9) selon la revendication 1, **caractérisé en ce que** les premiers éléments partiels de ferrure (10, 11) sont réalisés d'une seule pièce et/ou **en ce que** le premier moyen rotatif (60, 61) est réalisé d'une seule pièce.

3. Dispositif de réglage (9) selon la revendication 1 ou 2, **caractérisé en ce que** le premier moyen rotatif (60, 61) peut rouler sur la deuxième partie de ferrure (2).

4. Dispositif de réglage (9) selon l'une quelconque des revendications précédentes, **caractérisé en ce que** l'excentrique (3) comprend un premier élément d'excentrique (30) et au moins un deuxième élément d'excentrique (31), de préférence chaque élément d'excentrique (30, 31) étant associé à chaque fois à un composant partiel (90, 91).

5. Dispositif de réglage (9) selon la revendication 4, **caractérisé en ce que** les éléments d'excentrique (30, 31) sont disposés sur l'axe de rotation (7) en appui l'un contre l'autre.

6. Dispositif de réglage (9) selon la revendication 4 ou 5, **caractérisé en ce que** les éléments d'excentrique (30, 31) sont disposés de manière décalée l'un par rapport à l'autre d'un angle (777) autour de l'axe de rotation (7), l'angle (777) étant une fraction de 360°, et le diviseur correspondant au nombre des composants partiels (90, 91).

7. Dispositif de réglage (9) selon l'une quelconque des revendications 4 à 6, **caractérisé en ce que** les éléments d'excentrique (30, 31) sont serrés l'un contre l'autre par un moyen de force (4).

8. Dispositif de réglage (9) selon l'une quelconque des revendications 4 à 7, **caractérisé en ce qu'**un axe médian (707) s'étendant à travers un premier centre (7007) du premier élément d'excentrique (30) et un deuxième centre (7008) du deuxième élément d'excentrique (31) coupe l'axe de rotation (7).

9. Dispositif de réglage (9) selon l'une quelconque des revendications 4 à 8, **caractérisé en ce que** le premier élément d'excentrique (30) et le deuxième élément d'excentrique (31) forment conjointement avec le moyen de force (4) un corps rotatif (900), et **en ce que** dans le mode de fonctionnement, sous l'effet de la rotation du corps rotatif (900) autour de l'axe de rotation (7), la première partie de ferrure (1) peut être réglée par rapport à la deuxième partie de ferrure (2), le corps rotatif (900) entourant essentiellement concentriquement l'axe de rotation (7).

10. Dispositif de réglage (9) selon l'une quelconque des revendications précédentes, **caractérisé en ce que** chaque composant partiel présente un deuxième moyen rotatif (601, 611), qui est disposé concentriquement à l'excentrique (3), le deuxième moyen rotatif (601, 611) pouvant rouler à chaque fois sur le deuxième élément partiel de ferrure (20, 21) du même composant partiel (90, 91).

11. Dispositif de réglage (9) selon l'une quelconque des revendications précédentes, **caractérisé en ce que** les premiers moyens rotatifs (60, 61) et les deuxièmes moyens rotatifs (601, 611) sont disposés à angle droit par rapport à l'axe de rotation (7), le premier moyen rotatif (60, 61) pouvant à chaque fois rouler sur le premier élément partiel de ferrure respectif (10, 11) et le deuxième moyen rotatif (601, 611) pouvant à chaque fois rouler sur le deuxième élément partiel de ferrure respectif (20, 21) du même composant partiel (90, 91).

12. Dispositif de réglage (9) selon l'une quelconque des revendications précédentes, **caractérisé en ce qu'**il présente un arbre (71) qui forme l'axe de rotation (7).

13. Dispositif de réglage (9) selon l'une quelconque des revendications précédentes, **caractérisé en ce que** les premiers éléments partiels de ferrure (10, 11) et/ou les deuxièmes éléments partiels de ferrure (20, 21) et/ou les premiers moyens rotatifs (60, 61) s'étendent essentiellement à plat et/ou peuvent être fabriqués à partir d'un matériau s'étendant à plat.

14. Dispositif de réglage (9) selon l'une quelconque des revendications 10 à 13, **caractérisé en ce que** les deuxièmes moyens rotatifs (601, 611) s'étendant essentiellement à plat et/ou peuvent être fabriqués à partir d'un matériau s'étendant à plat.

15. Dispositif de réglage (9) selon l'une quelconque des revendications précédentes, **caractérisé en ce que** les premiers éléments partiels de ferrure (10, 11) présentent à chaque fois un premier moyen d'engagement par coopération de forme et/ou par force (800, 810), qui est disposé concentriquement autour de l'axe de rotation (7), **en ce que** les deuxième éléments partiels de ferrure (20, 21) présentent un deuxième moyen d'engagement par coopération de forme et/ou par force (801, 811), qui est disposé concentriquement autour de l'axe de rotation (7), **en ce que** les premiers moyens rotatifs (60, 601) présentent à chaque fois un troisième moyen d'engagement par coopération de forme et/ou par force (820, 822) et **en ce qu'**à chaque fois les troisièmes moyens d'engagement par coopération de forme et/ou par force (820, 822) sont au moins en partie en prise avec le premier moyen d'engagement par coopération de forme et/ou par force (800, 810) et/ou avec le deuxième moyen respectif d'engagement par coopération de forme et/ou par force (801, 811).

16. Dispositif de réglage (9) selon l'une quelconque des revendications 10 à 15, **caractérisé en ce que** les deuxièmes moyens rotatifs (61, 611) présentent à chaque fois un quatrième moyen d'engagement par coopération de forme et/ou par force (821, 823), à chaque fois les quatrièmes moyens d'engagement par coopération de forme et/ou par force (821, 823) étant au moins en partie en prise avec le deuxième moyen respectif d'engagement par coopération de forme et/ou par force (801, 811).

17. Dispositif de réglage (9) selon l'une quelconque des revendications 10 à 16, **caractérisé en ce qu'**à chaque fois au moins le deuxième élément intermédiaire partiel de ferrure (201, 211) présente le deuxième moyen d'engagement par coopération de forme et/ou par force (801, 811).

18. Dispositif de réglage (9) selon l'une quelconque des revendications 15 à 17, **caractérisé en ce que** les moyens d'engagement par coopération de forme et/ou par force (800, 810, 801, 811, 820, 822, 821, 823) sont des dents.

19. Dispositif de réglage (9) selon la revendication 18, **caractérisé en ce que** le nombre des dents des troisièmes moyens d'engagement par coopération de forme et/ou par force (820, 822) est différent du nombre des dents des quatrièmes moyens d'engagement par coopération de forme et/ou par force (821, 823).

20. Dispositif de réglage (9) selon l'une quelconque des revendications 10 à 19, **caractérisé en ce que** les premiers moyens rotatifs (60, 61) présentent un premier rayon extérieur (607, 617), **en ce que** les deuxièmes moyens rotatifs (601, 611) présentent un deuxième rayon extérieur (6017, 6117) et **en ce que** le premier rayon extérieur (607, 617) est différent du deuxième rayon extérieur (6017, 6117).

21. Dispositif de réglage (9) selon l'une quelconque des revendications précédentes, **caractérisé en ce que** la première partie de ferrure (1) ou les premiers éléments partiels de ferrure (10, 11) présentent des moyens de retenue (105).

22. Procédé de fabrication d'un dispositif de réglage (9) selon l'une quelconque des revendications précédentes, **caractérisé en ce qu'**au moins les premiers moyens rotatifs (60, 61), les premiers éléments partiels de ferrure (10, 11) et les deuxième éléments partiels de ferrure (20, 21) sont estampés dans un matériau essentiellement plat et sont ensuite connectés les uns aux autres en partie, de préférence par soudage au laser.

23. Procédé de fabrication d'un dispositif de réglage (9) selon l'une quelconque des revendications 10 à 22, **caractérisé en ce que** les premiers moyens rotatifs (60, 61), les premiers éléments partiels de ferrure (10, 11), les deuxième éléments partiels de ferrure (20, 21), les éléments intermédiaires partiels de ferrure (200, 201, 210, 211) et les deuxièmes moyens rotatifs (601, 611) sont estampés dans un matériau essentiellement plat, et sont ensuite connectés les uns aux autres en partie, de préférence par soudage au laser.

24. Procédé selon la revendication 23, **caractérisé en ce qu'**à chaque fois les premiers et deuxièmes moyens rotatifs (60, 601, 61, 611) des composants partiels (90, 91) sont connectés de manière solidaire en rotation les uns aux autres, **en ce que** les éléments intermédiaires partiels de ferrure (200, 201, 210, 211) des composants partiels (90, 91) sont connectés de manière solidaire en rotation les uns aux autres, **en ce que** les premiers éléments partiels de ferrure (10, 11) des composants partiels (90, 91) sont connectés l'un à l'autre ou sont réalisés d'une seule pièce, **en ce que** les composants du dispositif de réglage (9) sont disposés sur l'axe de rotation (7) et **en ce que** les deuxièmes éléments partiels de ferrure (20, 21) et/ou au moins un élément intermédiaire partiel de ferrure (200, 210) des deux composants partiels (90, 91) disposés tous les deux à l'extérieur sont ensuite au moins en partie connectés l'un à l'autre.
